# EUROPEAN PATENT APPLICATION

(11) **EP 3 623 882 A1**
(43) Date of publication of application: **18.03.2020**
(21) Application number: 18194301.0
(22) Date of filing: 13.09.2018
(51) Int. Cl.: G05B 19/401

(54) **IDENTIFYING TYPE AND ALIGNMENT OF A WORKPIECE**

(71) Applicant: Siemens Aktiengesellschaft, 80333 München (DE)
(72) Inventor: Bagramyan, Tigran, 97616 Bad Neustadt a. d. Saale (DE); Glushkov, Andrey, 97616 Bad Neustadt a. d. Saale (DE)

(57) **Abstract**

A workpiece in a manufacturing device shall be identified reliably. Therefore, there is provided a method including the steps of providing a first data set of images of plural workpieces, wherein the first data set comprises images from several points of view for each workpiece of the plural workpieces, providing a second data set of images comprising images for each workpiece from several pregiven alignment angles and providing a neural network having a feature extraction part (13) and a classifying part (19). Only the classifying part (19) is trained with the first and second data sets. An image of the workpiece is captured and the type and alignment of the workpiece is identified with the trained neural network.

## Description

The present invention relates to a method of identifying a type and an alignment of a workpiece of a manufacturing device. Furthermore, the present invention relates to a manufacturing device capable of identifying a type and an alignment of a workpiece. Additionally, the present invention relates to a corresponding computer program product.

Manufacturing devices may include CNC machines like milling machines, drilling machines and lathe machines. Furthermore, the manufacturing devices may include robots, conveying machines, generative manufacturing machines (like 3D printer) or similar. In any case the manufacturing device handles a workpiece. The proper handling of the workpiece requires that the type of workpiece is correct and the exact alignment of the workpiece is accurate.

Manufacturing devices are often used in highly automated environments in order to produce a large number of the products. Typically the manufacturing devices are used to produce only few different types of products. In this case only few different types of workpieces are required as starting product. However, in most cases it is essential to place the correct type of working piece in the manufacturing device and to align the working piece accurately. For instance, when drilling a hydraulic valve body a cube with three bores may be used as starting product or workpiece. This cube with three bores has to be distinguished from a cube with four bores. I.e. the type of the workpiece is essential. Moreover, the cube with the three bores has to be aligned properly. I.e. the cube may have a 0°, 90°, 180° or 270° orientation. Additionally, the cube may stand on the upper side or the bottom side. For milling the cube according to a pregiven program it is necessary to orientate the cube in the prescribed manner.

A quality assurance method has to guarantee that
a) a proper workpiece instance is installed in the manufacturing device, e.g. CNC machine and
b) the workpiece is properly aligned e.g. with clamps (not erroneously rotated).

In case of a high similarity between certain workpieces a frequent event of a wrong type of workpiece being installed in the machine may occur. A similar problem arises if the workpieces have a high rotational symmetry. Then it is difficult to install the workpiece correctly aligned in the manufacturing device. These problems lead to failures in the workpiece manufacturing process and/or to CNC machine brakes.

According to known methods a machine operator refers to a printed image of the workpiece to manually determine which workpiece should be installed in the machine and its correct orientation.

The object of the present invention is to provide an automated method for a quality assurance to ensure the correct type and orientation of a workpiece in a manufacturing device. Furthermore, a corresponding manufacturing device shall be provided.

According to the present invention this object is solved by a method and a manufacturing device as well as a computer program product according to the independent claims. Further favourable developments are defined in the subclaims.

In a first aspect of the present invention there is provided a method of identifying a type and an alignment of a workpiece of a manufacturing device. The manufacturing device may be anyone mentioned in the introductory part of the description. The method does not only include to determine the type of the workpiece but also to determine the alignment of the workpiece to be processed.

The method includes the training of a neural network. For this specific training it is necessary to provide two different data sets. In a first step there is provided a first data set of images of plural workpieces, wherein the first data set comprises images from several points of view for each workpiece of the plural workpieces. For instance, if there are four different workpieces there should be provided a sufficient number of different images from each of the four workpieces. The images of one workpiece represent one type of workpiece. For example, images from different sides of the workpiece shall be provided. Images may be captured from a front view, a diagonal right view, a diagonal left view, a top view or other perspective views. These views typically characterize the 3D structure of the workpiece. According to this 3D structure the workpiece can be identified reliably.

Furthermore, there is provided a second data set of images comprising images for each workpiece from several pregiven alignment angles. This second data set is necessary to identify the alignment of the workpiece. If, for example, the workpiece could be orientated in four orthogonal directions, it is reasonable to take images from these four different orientations. Otherwise, if the workpiece is a hexagonal prism it may be necessary to take six different images for each different orientation of the prism. Thus, a proper number of images shall be taken from the workpiece to guarantee the correct identification of the alignment of the workpiece.

Furthermore, there is provided a neural network having a feature extraction part and a classifying part. Thus, the inventive method does not employ a single standard neural network but a modified neural network having an extraction part and on top a classifying part. The feature extraction part serves for extracting features from the images in a usual manner. The classifying part is used to perform a classification so that a present image or a situation can be classified in accordance with the type and alignment of the workpiece. Only the classifying part of the neural network is trained with the first and second data set. The first and second data sets are not used to train the feature extraction part of the neural network. The weights of the feature extraction part are rather frozen when the classifying part is trained. However, the feature extraction part can be pretrained with other specific data, whereas the classifying part is trained on the actually used workpieces and orientations.

During applying the identifying method an image of the workpiece is captured. This means that an image of the actual type of workpiece and the actual orientation of the workpiece is taken. The image may be taken from a camera of the manufacturing device. However, the image may also be taken from an external camera in order to provide it to the manufacturing device. As required one or more further images of the workpiece are captured and processed.

Finally, the type and alignment of the workpiece is identified with the trained neural network. The identification is based on the feature extraction and the classification performed by the different parts of the neural network. Due to the specific training of the classifying part there is a high certainty that the actual type and actual orientation of the workpiece is determined accurately.

In a preferred embodiment the feature extraction part of the neural network is trained with a data set independent of the workpiece, and specifically with ImageNet images. Thus, the feature extraction part of the neural network may be trained with images being specifically provided for such purposes of training neural networks for feature extraction tasks. However, other standard sets of images can be used for training the feature extraction part of the neural network. The advantage of such training with standard data is that the feature extraction part of the neural network can be trained in advance. Furthermore, such training with standard images ensures high quality for the feature extraction function.

In another embodiment the first data set comprises images of at least one of the workpieces under different lighting conditions. Such training with different lighting conditions is necessary, if the method shall be applied e.g. during different daylight conditions, or different illumination conditions. Only a training with images of the workpiece in different lighting conditions guarantees that the workpiece can be identified independent from the actual illumination.

Preferably the step of training includes deep learning. A prerequisite for the deep learning is that the neural network has a plurality of different layers. Deep learning uses a cascade of multiple layers of non-linear processing units for a feature extraction and transformation. Each successive layer uses the output from the previous layer as input. Multiple levels of representation that correspond to different levels of abstraction are learned.

In a specific preferred embodiment the classifying part of the neural network includes a fully connected classifier preferably comprising a flatten layer a dense layer for dimension 256 with ReLu activation, a dropout layer and a dense layer for dimension N with softmax activation, where N is the number of output classes. E.g. N=4 rotation classes 0°, 90°, 180° and 270°. For a workpiece identification use case the dimension of the last layer is equal to N, where N is the number of different workpieces corresponding to the number of output classes.In the fully connected classifier all nodes are interconnected. Therefore, the fully connected classifier does not need to use packet switching or broadcasting. The specific dimensions of the layers may be optimized for the respective tasks of classification.

In a further embodiment the number of classes of the classifying part may be M+N, where M represents the number of possible orientations of the workpiece and N represents the number of the plural workpieces. Thus, the actual workpiece usually will be classified clearly into two classes, one class for the type of the workpiece and one class for the orientation. Thus, accurate type data and accurate orientation or alignment data can be gained reliably.

The above object is also solved by a manufacturing device capable of identifying a type and an alignment of a workpiece, the manufacturing device comprising
- processing means including a neural network having a feature extraction part and a classifying part,
- training means for training only the classifying part of the neural network with a first and a second data set,
- the first data set including images of plural workpieces and specifically images from several points of view for each workpiece of the plural workpieces,
- the second data set including images for each workpiece from several pregiven alignment angles and
- capturing means for capturing an image of the workpiece to be identified, wherein
- the processing means is capable of identifying the type and alignment of the workpiece on the basis of the image with the classifying part of the neural network being trained with the first and second data set.

The above-mentioned possibilities of variation and different features of the inventive method also apply for the inventive manufacturing device. Thus, corresponding advantages of the method can be obtained with a manufacturing device.

The processing means may include a processor for processing respective input data in order to provide respective output data. The training means may include a training device which also can include a separate processor. Furthermore, the training means may include an external or internal data base for providing the first and second data set of images.

The capturing means may include a camera and an imaging processor for providing an actual image of the workpiece. The capturing means may be implemented within the housing of the manufacturing device or may be provided external from the housing of the manufacturing device.

In a further development the manufacturing device is realised as CNC machine, robot, generative manufacturing machine or conveying machine. Such machines handle and/or process the workpieces automatically. In each individual application it is necessary to identify the type and the alignment of the workpiece in order to ensure high quality of the manufacturing process.

Specifically, the CNC machine may be a milling machine, a drilling machine or a lathe machine. These CNC machines require a perfect alignment and a sure identification of the type of the workpiece. Otherwise, the operation of the milling machine, the drilling machine or the lathe machine are not reasonable.

In an advantageous embodiment the extraction part of the neural network includes a VGG16 or a MobileNetv2 network. These specific convolutional neural networks are suitable for the present application of identifying the type and alignment of the workpiece due to their internal structure. Specifically, the VGG16 achieves a very good performance on the ImageNet data set. Furthermore, the MobileNetv2 is excellently applicable for embedded vision applications.

In a further preferred embodiment of the manufacturing device the classifying part of the neural network may include a fully-connected layer classifier. The corresponding fully connected layer at the end of the neural network produces an N dimensional vector where N is the number of classes that the classifier shall distinguish. In this way correct probabilities for the different classes may be obtained.

Additionally, there may be provided a computer program product comprising computer readable means, on which a computer program is stored, wherein the computer program, when executed on a processor, causes the processor with the neural network to carry out a method as described above. Specifically, the processor may be implemented on the manufacturing device and the processor causes the manufacturing device to carry out the method.

The present invention will now be described in more detail along with the attached figures showing in:
- FIG 1: a flow chart of an example of an inventive method;
- FIG 2: a schematic block diagram of an inventive manufacturing device;
- FIG 3: a block diagram of a first modified neural network and
- FIG 4: a block diagram of a second modified neural network.

The following specific embodiments represent preferred examples of the present invention.

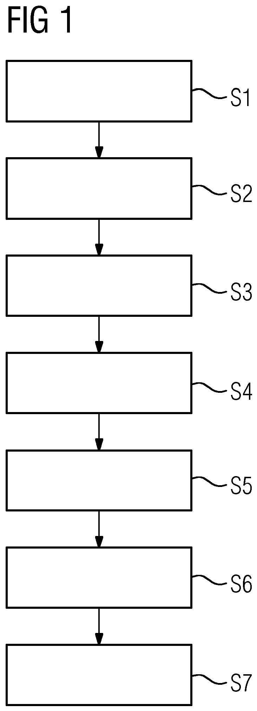

The flow chart of FIG 1 shows principle steps of a specific embodiment of a method for identifying a type and an alignment of a workpiece of a manufacturing device. In a first step S1 there is provided a first data set of images of plural workpieces, wherein the first data set comprises images from several points of view for each workpiece of the plural workpieces. The first data set may be provided in a storage device which is included in the manufacturing device or which is external from the manufacturing device. Specifically, these images of the first data set may be provided via a network which is connected to the manufacturing device. The images show the workpieces preferably from different sides and under different lighting conditions.

In a second step S2 there is provided a second data set of images comprising images for each workpiece from several pregiven alignment angles. Whereas the images of the first data set serve to learn the type of the workpiece, the images of the second data set are used for learning the alignment of the workpiece. Therefore, the respective angle of the point of view from which the respective image is taken is very decisive for the images of the second data set. In contrast to that the angles of the points of view of the images of the first data set are not decisive for the alignment of the workpiece. Again, the second data set may be provided by an internal or external storage device with respect to the manufacturing device. Specifically, also the images of the second data set may be provided via a data network connected to the manufacturing device.

In a third step S3 a neural network is provided having a feature extraction part and a classifying part. This means that the neural network has two different functions, namely a feature extraction function and a classifying function. Accordingly, the neural network is designed to fulfil these functions. The classifying part of the neural network is set on top of the feature extraction part. This means that each image input into the neural network is first processed by the feature extraction part and then by the classifying part.

In an optional step S4 the feature extraction part of the neural network is trained with a data set independent of the workpiece, wherein the data set preferably comprises images from ImageNet. These standardized images of ImageNet allow training of the feature extraction part well before the practical use of the manufacturing device. Thus, the feature extraction part does not need to be trained on the specific task of the neural network which shall identify the type and alignment of a workpiece. In particular, the feature extraction part of the neural network does not need to be trained on the specific workpieces to be identified. The feature extraction algorithm rather detects and isolates various desired portions or shapes (features) of a digitized image or video stream. Especially, the feature extraction algorithm is capable of detecting edges, corners, blobs curvatures and the like.

In a fifth step S5 only the classifying part of the neural network is trained with the first and second data set. This means that both parts of the neural network may be trained specifically but separately for the tasks of identifying the type and the alignment of the workpiece. In other words, only a part of the complete neural network is trained for the individual task of the neural network.

In a further step S6 an image of the workpiece to be identified is captured. This image shows the actual situation of the workpiece to be processed by the manufacturing device. The image shows the type and the alignment of the workpiece as clamped in the manufacturing device, for instance.

In a last step S7 the type and the alignment of the workpiece are identified on the basis of the captured image with the trained neural network. This means, that the workpiece is identified. The identification information of this processing step may be used to control the manufacturing device or to produce an alert when the type or alignment is not correct.

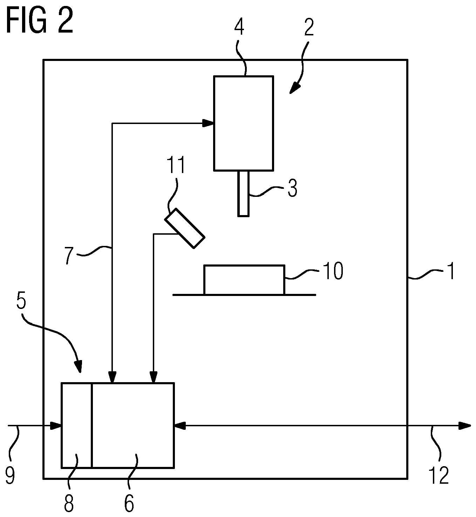

The block diagram of FIG 2 shows the principle structure of a manufacturing device of an embodiment of the present invention. The manufacturing device includes a tool section 2 comprising a tool 3. Additionally, the tool section 2 comprises a drive 4.

The manufacturing device 1 may further include a controller 5. The controller 5 may comprise processing means 6 including a neural network having a feature extraction part and a classifying part. The processing means 6 also serve for controlling the tool section 2. For this purpose there is provided a data communication 7 (preferably bidirectional) between the controller 5 and the tool section 2. Furthermore, the controller 5 may include training means 8 for training only the classifying part of the neural network with a first and a second data set. Alternatively, the training is performed separately in the cloud and a processing device on the CNC machine is used for running the inference only. Thus, the training means are located e.g. anywhere in the internet.

The first data set includes images of plural workpieces and specifically images from several points of view for each workpiece of the plural workpieces. The second data set includes images for each workpiece from several pregiven alignment angles like 0°, 90°, 180° and 270°. The controller 5 may be provided with an interface 9 for receiving these two data sets of images.

The processing means 6 is capable of identifying the type and alignment of a workpiece 10 with the classifying part of the neural network being trained with a first and second data set. The workpiece 10 may be clamped in a respective bracket of the manufacturing device 1. A camera 11 of the manufacturing device 1 may be used as capturing means for capturing an image of the workpiece 10. Optionally, there are provided more than one camera. The one or more cameras capture one or more images of the actual situation of the workpiece 10. The corresponding one or more images are the basis for identifying the type and alignment of the workpiece 10.

The identification information of the processing means 6 of the controller 5 may be provided via a further interface 12 by the controller. Additionally, the identification information may be used by the controller 5 internally in order to control the tool section 2. Furthermore, the identification information may be used to control a specific signalling device or display (not shown in FIG 2) for providing respective identification information acoustically or optically to a user.

The manufacturing device may be a CNC machine and specifically, a milling machine, a drilling machine or a lathe machine. Alternatively, the manufacturing device may be realized as robot or conveying machine or even a generative manufacturing device like a 3D printer.

In a specific embodiment the above-described method for analysing images may be used to identify the workpiece 10 and its alignment (coarse rotation) in the CNC machine. The image data comes from the camera 11 installed in the CNC machine which is used for workpiece condition monitoring. A training data set containing images of available workpieces and four coarse rotations of each is used to train the neural network for classification between workpieces and their rotations. The neural network may consist of a VGG16-or MobileNetv2-based feature extraction part and a fully-connected layer classifier on top of it.

The feature extraction part may be pretrained on an ImageNet data set, and the corresponding weights are frozen for the training process during which only the weights of the fully-connected classifier are being adjusted. While inference an image of the workpiece from the camera 11 is propagated through the neural network and probabilities of the image belonging to every class (particular workpiece and its rotations) are being assigned. The class with the highest probability defines the workpiece and the corresponding rotation detected.

One specific embodiment of the present invention consists of two major blocks: a model training and a model execution. Model training is based on a data set unit. The data set unit consists of a first data set including images of all the workpieces captured from diverse points of view for workpiece identification use case. Furthermore, the training data set unit includes a second data set with images of the particular workpiece rotated by 0°, 90°, 180° and 270° (preferably with a little camera view-point variation) for workpiece alignment (orientation detection) use case.

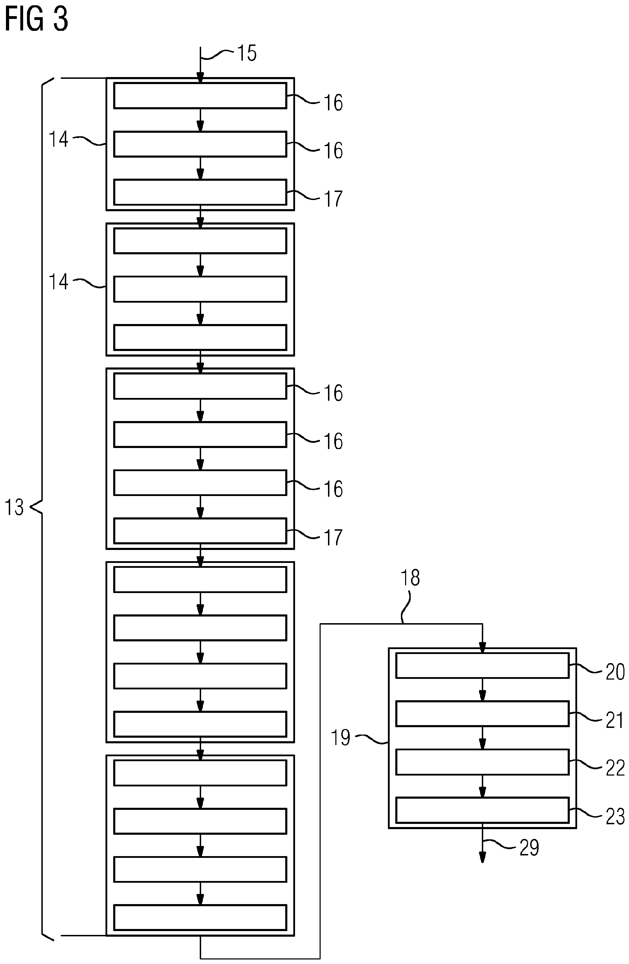

A deep learning model architecture may replicate the architecture of a convolutional neural network (CNN) e.g. a VGG16 neural network, up to the last convolutional layer. This part is called feature extractor 13 as shown in FIG 3. The feature extractor 13 may be loaded with weights pretrained on an ImageNet data set.

In the example of FIG 3 the feature extractor 13 consists of five convolutional blocks 14. An image 15 is input to the series of these convolutional blocks 14. The five convolutional blocks in this series may have 64, 128, 256, 512 and 512 output filters. The feature extractor 13 may of course comprise another number of convolutional blocks 14, and the blocks may comprise a different number of filters.

Each convolutional block 14 includes two or three convolutional layers 16 and a MaxPooling layer 17 at the respective output. At the final output of the feature extractor 13 there is provided a feature map 18.

In the present example the feature map 18 of the feature extractor 13 is input into a fully-connected layer classifier 19 added on top of the feature extractor 13. Both the feature extractor 13 and the fully-connected layer classifier 19 form the complete neural network. In the present case the classifier 19 consists of the following layers: a flatten layer 20, a dense layer 21 (dimension 256) with ReLu (rectified linear unit function) activation, dropout layer 22 (dropout value 0,5) and dense layer 23 (dimension 4) with Softmax activation. The output of the neural network 13, 19 is a classification vector (i.e. a set of classification values).

During training all the weights of the feature extractor 13 are frozen (they are not being updated) and only the weights of the fully-connected layer classifier are optimized using e.g. SGD (stochastic gradient descent) with a learning weight of 1e-4 and a momentum of 0,9.

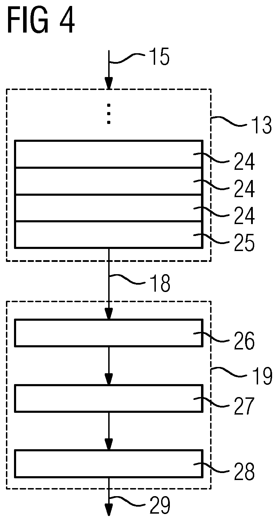

In an alternative embodiment shown in FIG 4 the deep learning model architecture replicates the architecture of a MobileNetv2 neural network up to the last convolutional layer. This part may also be called feature extractor 13. It includes a respective number of blocks 24 and at the end a 1x1 convolutional layer 25. The image 15 input to the feature extractor 13 is also processed to a feature map 18. Again on top of the feature extractor 13 a (fully-connected layer) classifier 19 is added for processing the feature map 18. The classifier 19 may include the following layers: a global average pooling layer 26 (2D), a (1x1) convolutional layer 27 (or fully-connected) and a dense layer 28 (dimension N for workpiece identification and four for coarse rotation) with Softmax activation. The output of the classifier 19 will be a classification vector 29 similar to the embodiment of FIG 3. The classification vector 29 includes probability values for each class.

During training all the weights of the feature extractor 13 are frozen and only the weights of the fully-connected classifier 19 are trained using e.g. Adam or (SGD) optimizer.

In the use phase, i.e. during model inference, the image of the workpiece 10 captured from the video stream is propagated through the neural network, which assigns probabilities to each of the classes:
- 4 classes, corresponding to 0°, 90°, 180°, 270° rotation for workpiece orientation detection use case;
- N classes, corresponding to the number of different workpieces used for collecting the training set.

The classes with the highest probability define the workpiece and corresponding rotation detected.

When the camera 11 is being installed inside the CNC machine and the identified workpiece does not correspond to the correct workpiece that should be installed in the machine (or its orientation is incorrect), the user is being notified on the possible quality issues due to the incorrect workpiece alignment.

The described embodiments represent a (fully) automated test for workpiece identification and orientation detection which prevents quality issues during processing. Compared to prior solutions the proposed solution is no longer based on a manual workpiece alignment check which has higher costs and lower robustness. Compared to other methods of visual analytics based on deep learning techniques, the proposed solution achieves state of the art accuracy and real-time computational performance.

## Claims

1. Method of identifying a type and an alignment of a workpiece (10) of a manufacturing device (1) including the steps of
- providing (S1) a first data set of images of plural workpieces, wherein the first data set comprises images from several points of view for each workpiece of the plural workpieces,
- providing (S2) a second data set of images comprising images for each workpiece from several pregiven alignment angles,
- providing (S3) a neural network having a feature extraction part (13) and a classifying part (19),
- training (S5) only the classifying part (13) of the neural network with the first and second data set,
- capturing (S6) an image (15) of the workpiece (10) to be identified and
- identifying (S7) the type and alignment of a workpiece (10) on the basis of the image (15) with the trained neural network.

2. Method according to claim 1, wherein the feature extraction part (13) of the neural network is trained with a dataset independent of the workpiece (10), and specifically with an ImageNet dataset.

3. Method according to claim 1 or 2, wherein the first data set comprises images of at least one of the workpieces under different lighting conditions.

4. Method according to one of the preceding claims, wherein the step of training (S5) includes deep learning.

5. Method according to one of the preceding claims, wherein the classifying part (19) of the neural network includes a fully connected classifier preferably comprising a flatten layer (20), a dense layer (21) for dimension 256 with ReLu activation, a dropout layer (22) and a dense layer (23) for dimension N with softmax activation, where N is the number of output classes.

6. Method according to one of the preceding claims, wherein the number of classes of the classifying part (19) is M+N, where M represents the number of possible orientations of the workpiece and N represents the number of the plural workpieces.

7. Manufacturing device (1) capable of identifying a type and an alignment of a workpiece (10), the manufacturing device (1) comprising
- processing means (6) including a neural network having a feature extraction part (13) and a classifying part (19),
- training means (8) for training only the classifying part (13) of the neural network with a first and a second data set,
- the first data set including images of plural workpieces and specifically images from several points of view for each workpiece of the plural workpieces,
- the second data set including images for each workpiece from several pregiven alignment angles and
- capturing means (11) for capturing an image (15) of the workpiece (10) to be identified, wherein
- the processing means (6) is capable of identifying the type and alignment of the workpiece (10) on the basis of the image (15) with the classifying part (13) of the neural network being trained with the first and second data set.

8. Manufacturing device according to claim 7 being realized as CNC machine, robot, conveying machine or generative manufacturing device.

9. Manufacturing device according to claim 8, wherein the CNC machine is a milling machine, a drilling machine or a lathe machine.

10. Manufacturing device according to one of the claims 7 to 9, wherein the extraction part (13) of the neural network includes a VGG16 or a MobileNetv2 network.

11. Manufacturing device according to one of the claims 7 to 10, wherein the classifying part (19) of the neural network includes a fully-connected layer classifier.

12. Manufacturing device according to claim 11, wherein the fully-connected classifier part is part of VGG16- or Mobilenetv2- based networks.

13. Computer program product comprising computer readable means, on which a computer program is stored, wherein the computer program when executed on a processor causes the processor with a neural network to carry out a method according to one of the claims 1 to 6.
